# EUROPEAN PATENT APPLICATION

(11) **EP 4 596 378 A1**
(43) Date of publication of application: **06.08.2025**
(21) Application number: 24223650.3
(22) Date of filing: 30.12.2024
(51) Int. Cl.: B62H 5/00, B62J 9/30

(54) **STORAGE PART**

(30) Priority: 31.01.2024 JP 2024012756
(71) Applicant: HONDA MOTOR CO., LTD., Tokyo 105-8404 (JP)
(72) Inventor: NAKABAYASHI, Shunichi, 107-8556 Tokyo (JP); ITO, Daichi, 107-8556 Tokyo (JP)
(74) Representative: Weickmann & Weickmann PartmbB

(57) **Abstract**

A storage part (40) includes a storage part main body (42) having an opening, an opening/closing part (50) configured to releasably close the opening of the storage part main body (42), a buckle (55) configured to open and close the storage part (40), and a locking part (70) which is configured to maintain the opening/closing part (50) in a closed state and which is unlocked by a driving of an actuator (80) provided separately from the storage part (40). The locking part (70) has a locked part provided on the buckle (55), and a lever which is driven by the actuator (80) and which has a locking claw locked to the locked part.

## Description

### BACKGROUND OF THE INVENTION

### Field of the Invention

The present invention relates to a storage part.

### Description of Related Art

As a storage part attached to a vehicle, there is known storage part including a locking part configured to lock an opening/closing lid, and an electric actuator configured to control a locking state of the locking part (for example, see Japanese Unexamined Patent Application Publication (Translation of PCT Application) No. 2021-501715). Japanese Unexamined Patent Application Publication (Translation of PCT Application) No. 2021-501715 discloses a top box for a moped including a lower shell and an upper shell, a button provided to open the upper shell with respect to the lower shell, an underlock main body configured to able to rotate the button from a lock mode of locking the button to a lock release mode of releasing the lock or to switch to the reverse thereof, and an electric motor configured to control the underlock main body.

### SUMMARY OF THE INVENTION

However, when an actuator configured to control a locking state is provided in the storage part, a volume of the storage part is reduced to an extent that a region in which the actuator is disposed is provided in the storage part. Accordingly, in the vehicle to which the storage part in the related art is attached, it is desirable to achieve improvement of convenience for users and suppress reduction in volume of the storage part by providing the actuator configured to control a state of the locking part that locks the storage part.

An aspect of the present invention is directed to achieving improvement of convenience for users and securing a volume of a storage part.

A storage part (40) according to a first aspect of the present invention includes a storage part main body (42) having an opening; and an opening/closing part (50) configured to releasably close the opening of the storage part main body (42), and further includes: a buckle (55, 55C) configured to open and close the storage part (40); and a locking part (70) which is configured to maintain a closed state of the opening/closing part (50) and which is unlocked by a driving of an actuator (80, 80B) provided separately from the storage part (40), the locking part (70) having: a locked part (71) provided on the buckle (55, 55C); and a lever (73) which is driven by the actuator (80, 80B) and which has a locking claw (75) locked to the locked part (71).

According to the first aspect, since the actuator is provided separately from the storage part, it is possible to suppress reduction in volume of the storage part due to provision of the actuator in the storage part. Accordingly, it is possible to achieve improvement of convenience for the user by controlling the locking state using the actuator and secure the volume of the storage part without compromising the appearance of the storage part.

Further, in the first aspect, the storage part may further include a detachable unit configured to detachably fix the storage part to a vehicle. In addition, in the first aspect, the locking part may be unlocked when the locking claw is disengaged from the locked part, the lever may have a protrusion protruding from the storage part, and the protrusion may be driven by the actuator.

In the storage part according to the above-mentioned (1), the storage part according to a second aspect of the present invention may further include, a transmission member (85, 85A) configured to connect the actuator (80) and the locking part (70), and the actuator (80) may drive the locking part (70) via the transmission member (85, 85A).

According to the second aspect, since the actuator is not directly connected to the locking part, it is possible to improve a degree of freedom in disposition of the actuator.

In accordance with the storage part according to a third aspect of the present invention, in the storage part according to the second aspect, the actuator (80) may be disposed in a vehicle body, and the transmission member (85, 85A) may have a wire shape.

According to the third aspect, since the transmission member is deformable, it is possible to further improve the degree of freedom in disposition of the actuator.

Further, in the third aspect, the transmission member may include a wire-shaped cable, and a slide member connected to the cable, engaged with the locking part and displaceable with respect to the vehicle body. Accordingly, it is possible to easily connect the locking part and the transmission member.

In accordance with the storage part according to a fourth aspect of the present invention, in the storage part according to the second or third aspect, the transmission member (85) may be connected to the locking part (70) at a position below the storage part (40).

According to the fourth aspect, since the entire mechanism configured to drive the locking part can be disposed outside the storage part, it is possible to achieve enlargement of the volume of the storage part.

In accordance of the storage part according to a fifth aspect of the present invention, in the storage part according to the second or third aspect, the transmission member (85A) may be connected to the locking part (70) at inside of the storage part (40).

According to the fifth aspect, since the entire locking part can be disposed in the storage part, it is possible to suppress a decrease in portability of the storage part removed from the vehicle due to protrusion of the locking part from the storage part.

According to the storage part according to a sixth aspect of the present invention, in the storage part according to the first aspect, the storage part (40) may be supported by a base member (6) from below, and the actuator (80B) may be provided on the base member (6) and may directly drive the locking part (70).

According to the sixth aspect, a vehicle with the above-mentioned functions and effects can be obtained by replacing the base member. Accordingly, the storage part that can be applied to various types of vehicles is obtained.

In accordance with the storage part according to a seventh aspect of the present invention, in the storage part according to any one of the first to fourth, and sixth aspects, the locking part (70) may have a lever (73) driven by the actuator (80, 80B), the lever (73) may have a protrusion (76a) protruding downward from the storage part (40), and the storage part (40) may have a guard part (49) configured to cover surroundings of the protrusion (76a).

According to the seventh aspect, it becomes more difficult for people to come into contact with the lever. Accordingly, it is possible to prevent the lever from being directly operated and to improve anti-theft properties.

In accordance with the storage part according to an eighth aspect of the present invention, in the storage part according to any one of the first to seventh aspects, the buckle (55C) may be provided to be pivotable with respect to the storage part main body (42) or the opening/closing part (50), releasably locked to the opening/closing part (50) to restrict opening of the opening of the storage part main body (42) by the opening/closing part (50), and releasable from the opening/closing part (50) by unlocking the locking part (70), and the buckle (55C) may have: a smooth outer surface (55Ca) directed toward the outside of the storage part (40); and an edge portion (56Ca) displaced toward the outside of the storage part (40) by unlocking the locking part (70).

According to the eighth aspect, since the outer surface of the operating part is smooth, no handle is provided on the operating part, improving the appearance. Furthermore, the absence of the handle prevents people from maliciously applying excessive force to the operating part, improving anti-theft properties. Further, when the locking part is unlocked, the edge portion of the operating part is displaced outward, allowing the user to operate the operating part by hooking his/her fingers on the edge portion of the operating part.

In accordance with the storage part according to a ninth aspect of the present invention, in the storage part according to any one of the first to eighth aspects, the storage part may be provided separately from a vehicle body, and the actuator (80, 80B) may be provided on a side of the vehicle body.

According to the ninth aspect, the above-mentioned effects are effectively achieved.

In accordance with the storage part according to a tenth aspect of the present invention, in the storage part according to the ninth aspect, the storage part may be attachable to a carrier (6) provided behind a seat (4) of a saddle riding vehicle (1), the locking part (70) may have a lever (73) driven by the actuator (80, 80B), the lever (73) may have a protrusion (76a) protruding downward from the storage part (40), and the protrusion (76a) may be inserted into an insertion concave portion (6a) formed in the carrier (6).

According to the tenth aspect, the saddle riding vehicle to which the storage part is attached can be formed so that the member engaged with the lever does not protrude upward from the carrier toward the storage part. Accordingly, the storage part can be obtained that is able to be attached to the saddle riding vehicle, which makes it easy to load luggage onto the carrier.

According to the aspect of the present invention, it is possible to secure the volume of the storage part while achieving improved convenience for users.

### BRIEF DESCRIPTION OF THE DRAWINGS

FIG. 1 is a left side view of a motorcycle of a first embodiment.
FIG. 2 is a cross-sectional view showing a rear portion of a storage part and a carrier of the first embodiment and showing a cross section at a position corresponding to line II-II in FIG. 4.
FIG. 3 is a perspective view showing a vicinity of a rear portion of a lower case in the storage part of the first embodiment.
FIG. 4 is a perspective view showing an internal structure of a major portion of the storage part of the first embodiment.
FIG. 5 is a cross-sectional view showing a state in which a buckle in the rear portion of the storage part of the first embodiment is open, and showing a cross section at a position corresponding to line V-V of FIG. 4.
FIG. 6 is a cross-sectional view showing a state in which a locking part in the rear portion of the storage part of the first embodiment is locked, and showing a cross section at a position corresponding to line VI-VI of FIG. 4.
FIG. 7 is a cross-sectional view showing a state in which the locking part in the rear portion of the storage part of the first embodiment is unlocked, corresponding to FIG. 6.
FIG. 8 is a cross-sectional view showing a state in which the buckle is displaced forward in the rear portion of the storage part of the first embodiment shown in FIG. 5.
FIG. 9 is a cross-sectional view showing a state in which the buckle is displaced forward in the rear portion of the storage part of the first embodiment shown in FIG. 8.
FIG. 10 is a cross-sectional view showing a state in which the buckle is displaced forward in the rear portion of the storage part of the first embodiment shown in FIG. 9.
FIG. 11 is a cross-sectional view showing a state in which the buckle is displaced forward and rearward in the rear portion of the storage part of the first embodiment shown in FIG. 5.
FIG. 12 is a left side view of a motorcycle of a second embodiment.
FIG. 13 is a cross-sectional view showing a rear portion of a storage part and a carrier of a third embodiment, corresponding to FIG. 2.
FIG. 14 is a cross-sectional view showing a state in which a locking part in a rear portion of a storage part of a fourth embodiment is unlocked, corresponding to FIG. 7.

### DETAILED DESCRIPTION OF THE INVENTION

Hereinafter, embodiments of the present invention will be described with reference to the accompanying drawings. Further, in the following description, configurations having the same or similar functions are designated by the same reference signs. Then, duplicate descriptions of those configurations may be omitted. In addition, in the following explanation, directions such as forward, rearward, upward, downward, leftward and rightward are the same as those in a vehicle explained below. That is, an upward/downward direction coincides with a vertical direction, and a leftward/rightward direction coincides with a vehicle width direction. In addition, in the drawings used in the following description, an arrow UP indicates the upward direction, an arrow FR indicates the forward direction, and an arrow LH indicates the leftward direction.

### [First embodiment]

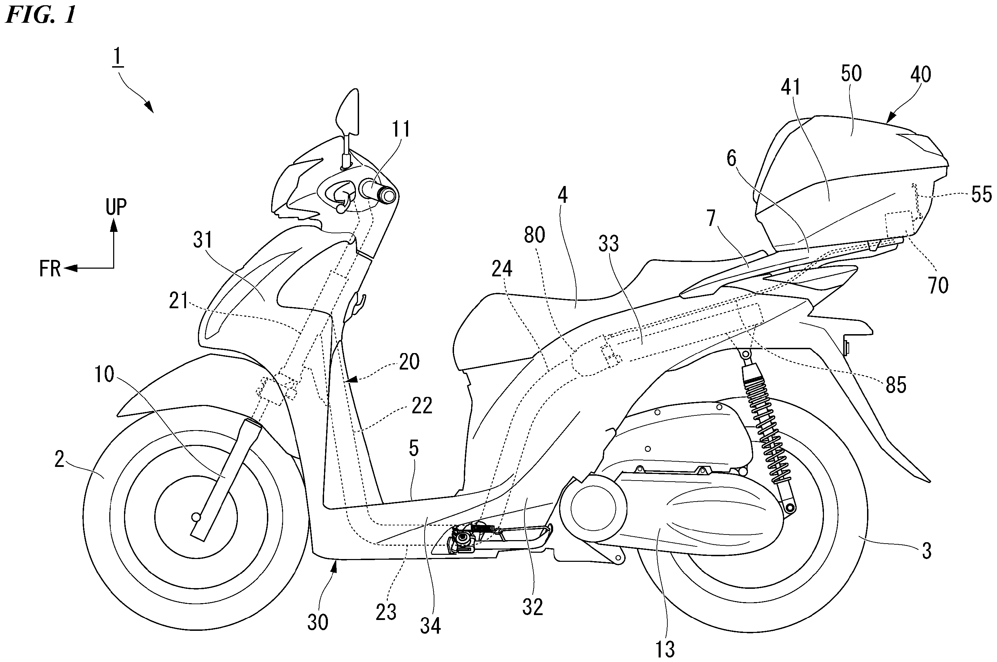

FIG. 1 is a left side view of a motorcycle of a first embodiment.

As shown in FIG. 1, a motorcycle 1 of the embodiment is a scooter type saddle riding vehicle having a step floor 5 on which an occupant sitting on a seat 4 places his/her legs. The motorcycle 1 includes a front wheel 2 that is a steered wheel, a rear wheel 3 that is a driving wheel, a vehicle body frame 20, and a vehicle body cover 30. The front wheel 2 is supported by a pair of left and right front forks 10 and can be steered by a bar handle 11. The rear wheel 3 is supported by a swing unit 13. The swing unit 13 vertically swingably supports the rear wheel 3 that is the driving wheel. The swing unit 13 integrally includes an engine that is a driving source, and for example, a V-belt type continuously variable transmission. The rear wheel 3 is supported by an output shaft of a rear portion of the continuously variable transmission. The rear portion of the continuously variable transmission is supported by the vehicle body frame 20 via a rear cushion.

The vehicle body frame 20 includes a head pipe 21 located at a front end portion thereof, a down frame 22 extending downward from the head pipe 21, a lower frame 23 extending to be curved rearward from a lower end portion of the down frame 22, and a pair of left and right rear frames 24 extending upward and rearward from the vicinity of a rear end portion of the lower frame 23. The head pipe 21 can steerably support steering system parts including the front forks 10 and the front wheel 2. A pivot part configured to vertically swingably support the swing unit 13 is provided in the vicinity of the rear end portion of the lower frame 23. The vehicle body frame 20 is covered with the vehicle body cover 30 that is an exterior part.

The vehicle body cover 30 includes, for example, a front cover 31 configured to cover a vehicle body front part, and a rear cover 32 configured to cover a vehicle body rear part. The rear cover 32 includes a pair of left and right rear side covers 33 configured to cover the vehicle body rear part from left and right outer side. A lower floor part 34 is provided between the front cover 31 and the rear cover 32. The step floor 5 is provided on an upper surface of the lower floor part 34. The seat 4 on which an occupant including a driver sits is disposed above the rear cover 32. The seat 4 has a front upper surface as a front seat surface, and a rear upper surface as a rear seat surface, which are lengthily formed in the forward/rearward direction.

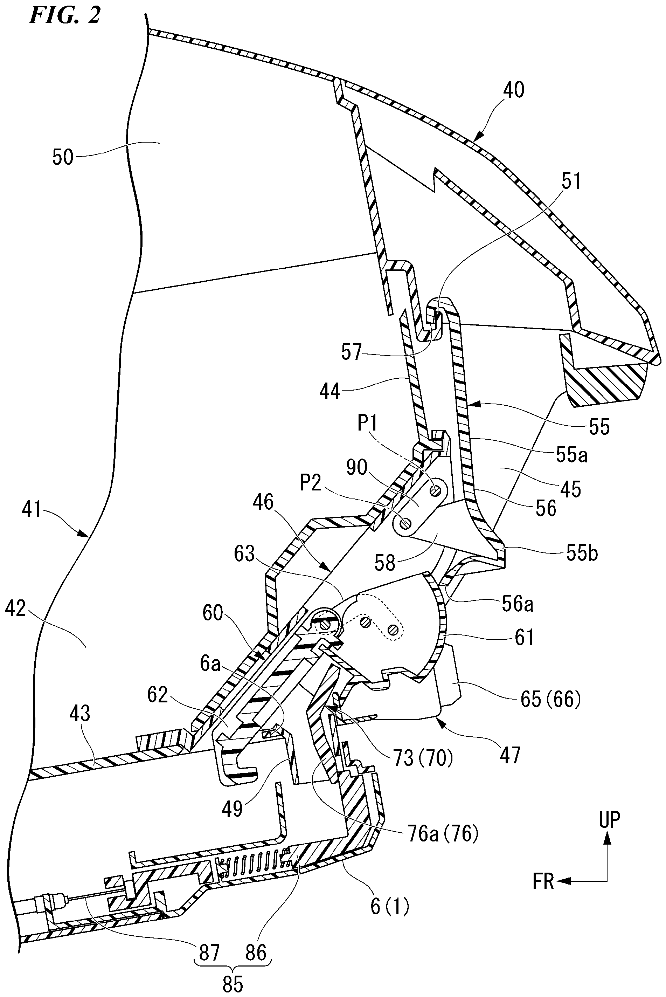

A carrier 6 (base member) is provided behind the seat 4. The carrier 6 extends rearward from a position behind the seat 4. Both left and right side portions of the carrier 6 may function as rear grips 7 for an occupant or a dismounted user to grip. For example, the carrier 6 is fixed to the vehicle body frame 20. Further, the carrier 6 may be fixed to the vehicle body cover 30. An insertion concave portion 6a is formed in the carrier 6 (see FIG. 2). The insertion concave portion 6a opens in the upper surface of the carrier 6 and opens upward.

A storage part structure is provided on the motorcycle 1. The storage part structure includes a storage part 40, a detachable unit 60, a locking part 70, an actuator 80, and a transmission member 85. The storage part 40 is provided separately from the motorcycle 1 and mounted on the motorcycle 1. The detachable unit 60 and the locking part 70 are provided integrally with the storage part 40. The actuator 80 is provided integrally with the motorcycle 1. The transmission member 85 connects the actuator 80 and the locking part 70.

The storage part 40 is provided outside the vehicle body cover 30. The storage part 40 is used as a so-called top box located behind and above the seat 4. The storage part 40 is directly supported on the carrier 6. The storage part 40 is placed on the carrier 6 to be separable upward. The storage part 40 includes a lower case 41, an opening/closing part 50, and a buckle 55.

The lower case 41 is attached to the carrier 6 so as to be immovable relative to the carrier 6. The lower case 41 forms a lower portion of the storage part 40. The lower case 41 includes a storage part main body 42, a base 46, and a cover 47.

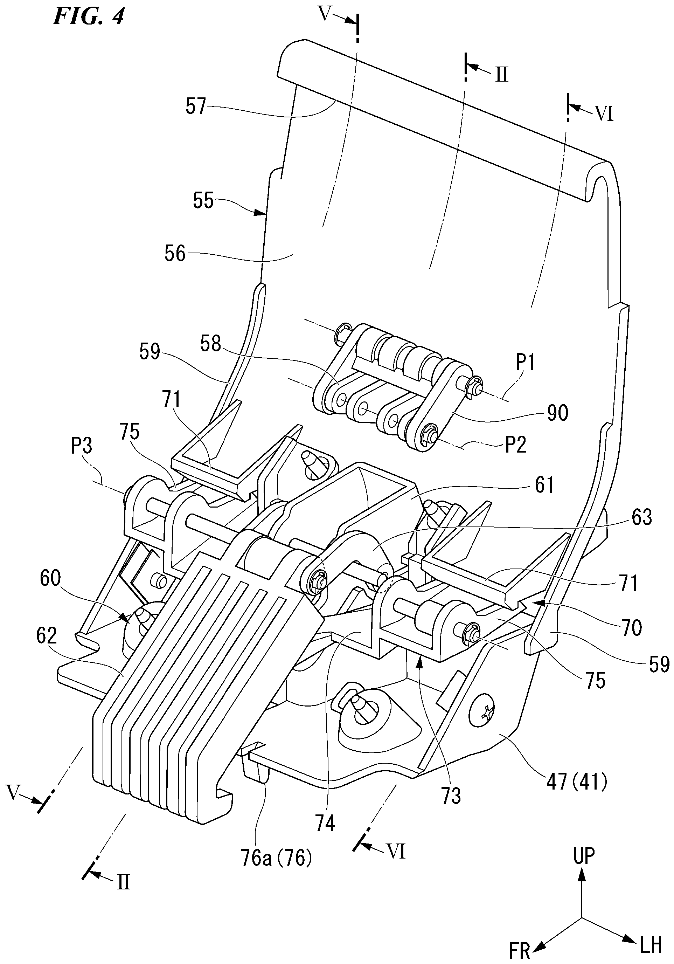

FIG. 2 is a cross-sectional view showing a rear portion of a storage part and a carrier of the first embodiment and showing a cross section at a position corresponding to line II-II in FIG. 4.

As shown in FIG. 2, the storage part main body 42 has a bottomed shape with an upper opening that opens upward. The storage part main body 42 integrally has a lower plate portion 43 that defines an article storage space in the storage part 40 from below, and a circumferential wall portion 44 standing upward from an outer circumferential portion of the lower plate portion 43.

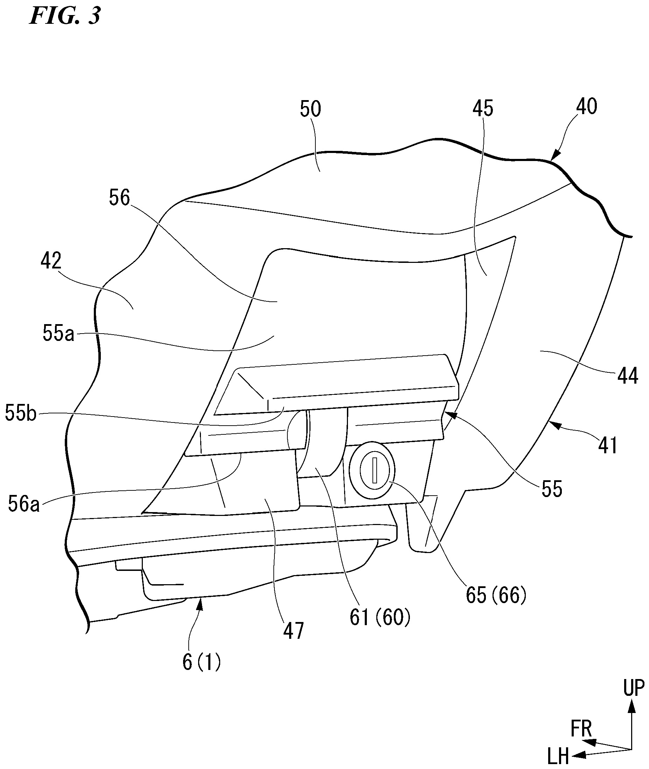

FIG. 3 is a perspective view showing a periphery of a rear portion of a lower case in the storage part of the first embodiment.

As shown in FIG. 3, a concave portion 45 is formed in a rear surface of the storage part main body 42. The concave portion 45 is formed in a rectangular shape extending in the upward/downward direction with a fixed width when seen from behind. The concave portion 45 opens from the rear surface of the storage part main body 42 throughout the lower surface.

As shown in FIG. 2, the base 46 is disposed inside the concave portion 45. The base 46 is disposed along a bottom surface of the concave portion 45, which is directed rearward. The base 46 is fixed to the storage part main body 42. The base 46 supports a link member 90 disposed inside the concave portion 45 so as to be pivotable about a first axis P1 extending in the leftward/rightward direction.

As shown in FIG. 2 and FIG. 3, the cover 47 is disposed inside the concave portion 45. The cover 47 is disposed to close a lower portion of the concave portion 45 when seen from behind. The cover 47 is fixed to the base 46 and disposed to be displaceable relative to the storage part main body 42. The cover 47 forms a gap in the forward/rearward direction relative to the base 46. The locking part 70 is disposed in the gap between the cover 47 and the base 46.

As shown in FIG. 2, the opening/closing part 50 is provided on the circumferential wall portion 44 of the storage part main body 42. The opening/closing part 50 is provided to close the upper opening of the storage part main body 42. The opening/closing part 50 is pivotably connected to the base 46 via a hinge mechanism coupled to the vicinity of the front end portion. Accordingly, the opening/closing part 50 closes the upper opening of the storage part main body 42. The opening/closing part 50 opens the upper opening of the storage part main body 42 by pivoting the rear end to be displaced upward.

As shown in FIG. 2 and FIG. 3, the buckle 55 is supported on the lower case 41 via the link member 90. The buckle 55 is disposed in the concave portion 45 of the storage part main body 42. The buckle 55 is disposed above the cover 47. The buckle 55 is connected to the storage part main body 42 and the opening/closing part 50. The buckle 55 is provided to be capable of transitioning between a restrictive state in which opening/closing of the storage part main body 42 and the opening/closing part 50 is restricted and an allowing state in which opening/closing of the storage part main body 42 and the opening/closing part 50 is allowed. The buckle 55 has a main body part 56, a locking part 57 releasably locked to the opening/closing part 50, a connecting part 58 pivotably supported on the link member 90, and side flanges 59.

The main body part 56 is formed in a rectangular plate shape extending in the upward/downward direction with a fixed width when seen in the forward/rearward direction. A lower edge 56a of the main body part 56 overlaps with the cover 47 in the forward/rearward direction. The lower edge 56a of the main body part 56 is disposed along a rear surface of the cover 47 to provide substantially no gap between the cover 47 and the lower edge 56a. The main body part 56 has the entire outer surface 55a of the buckle 55 exposed to the rear of the concave portion 45. A handle 55b hooked by the user's fingers when the user operates the buckle 55 is formed on the outer surface 55a. The handle 55b protrudes rearward and extends in the leftward/rightward direction. The handle 55b is disposed above a lower end of the main body part 56.

FIG. 4 is a perspective view showing an internal structure of a major part of the storage part of the first embodiment.

As shown in FIG. 2 and FIG. 4, the locking part 57 is provided on an upper end portion of the main body part 56. The locking part 57 is locked to a locked edge portion 51 provided on the opening/closing part 50 from above and restricts upward movement of the opening/closing part 50. The locking part 57 is restricted from rearward movement relative to the locked edge portion 51. The locking part 57 displaces upward to be released from the locked edge portion 51 and becomes movable rearward relative to the locked edge portion 51.

The connecting part 58 is provided at a place below the locking part 57. The connecting part 58 protrudes forward from a front surface of the main body part 56.

The connecting part 58 pivotably supports the link member 90 around a second axis P2 extending in the leftward/rightward direction. The second axis P2 is located at an opposite side of the locking part 57 with the first axis P1 sandwiched therebetween. The connecting part 58 pivots about the first axis P1. The connecting part 58 is biased rearward by a biasing force of a biasing member (not shown). For example, the biasing member biases the link member 90 around the first axis P1.

As shown in FIG. 4, the pair of side flanges 59 are provided on the buckle 55. The side flanges 59 each has a plate shape with a thickness in the leftward/rightward direction. The side flanges 59 overhangs forward from both left and right side edges of the main body part 56. The side flanges 59 are connected to lower portions of side edges of the main body part 56.

As shown in FIG. 2, the buckle 55 is restricted from upward displacement by the connecting part 58 engaging with the link member 90. As the buckle 55 swings rearward around the vicinity of the locking part 57, the link member 90 rotates about the first axis P1 and the connecting part 58 is displaced rearward. Accordingly, the pressure exerted by the link member 90 is released, allowing the buckle 55 to move upward. As the buckle 55 moves upward, the locking part 57 can be released from the locked edge portion 51.

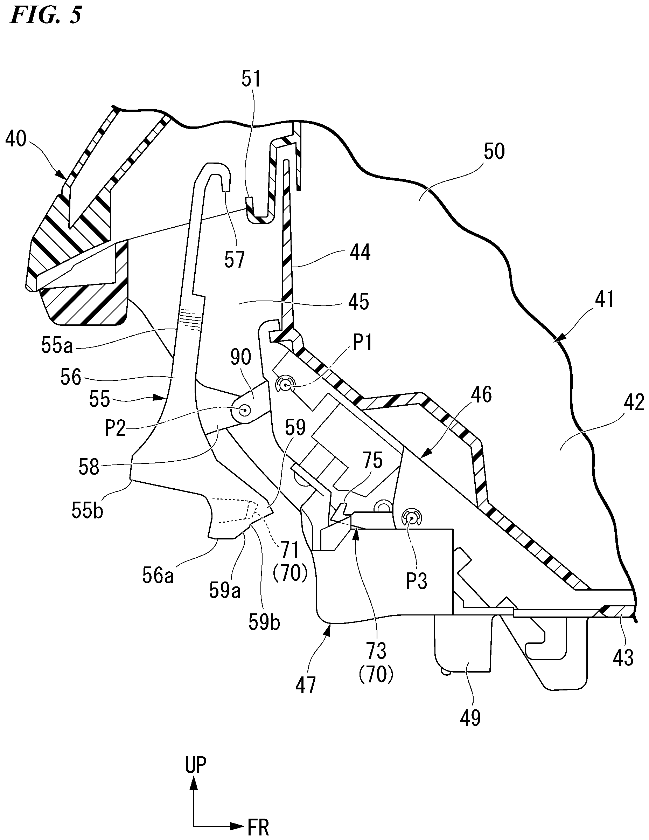

FIG. 5 is a cross-sectional view showing a state in which the buckle is open in the rear portion of the storage part of the first embodiment, showing a cross section at a position corresponding to line V-V in FIG. 4.

As shown in FIG. 5, the locking part 57 of the buckle 55 is released from the locked edge portion 51 and moved rearward, thereby moving away from a moving trajectory of the locked edge portion 51 when the opening/closing part 50 pivots. Accordingly, the opening/closing part 50 can be displaced upward.

As shown in FIG. 2 and FIG. 4, the detachable unit 60 detachably fixes the storage part 40 placed on the carrier 6 to the carrier 6. The detachable unit 60 is disposed in the concave portion 45 of the storage part main body 42. The detachable unit 60 includes a detachable lever 61, a fixed hook 62, and a connecting member 63.

The detachable lever 61 is pivotably provided around the axis extending in the leftward/rightward direction relative to the lower case 41. Almost the entire detachable lever 61 is disposed above the cover 47. The detachable lever 61 is exposed to the rear of the cover 47 at a position below the buckle 55 when seen from behind. The detachable lever 61 is formed smaller than the cover 47 and the buckle 55 in the leftward/rightward direction and overlaps with a central portion in the leftward/rightward direction of the buckle 55 in the forward/rearward direction. The detachable lever 61 is restricted in pivotal movement by a lock mechanism 66 including a key cylinder 65.

The fixed hook 62 is disposed at a position in front of the detachable lever 61. The fixed hook 62 is disposed in a gap between the base 46 and the cover 47. The fixed hook 62 is formed smaller than the cover 47 in the leftward/rightward direction. The fixed hook 62 has a front end portion that protrudes downward from the bottom surface of the lower case 41 and is releasably locked to the carrier 6. The front end portion of the fixed hook 62 is locked from the front against a predetermined edge of the carrier 6, and is restricted from moving rearward and upward relative to the carrier 6. The fixed hook 62 extends forward and upward from the front end portion toward the detachable lever 61.

The connecting member 63 includes a lever-side connecting portion pivotably connected to the detachable lever 61, and a hook-side connecting portion pivotably connected to the fixed hook 62 at a position in front of the lever-side connecting portion. The connecting member 63 is pivotable about an axis extending in the leftward/rightward direction relative to the detachable lever 61 and the fixed hook 62, respectively.

When the storage part 40 is removed from the carrier 6, the detachable unit 60 is operated as follows. Restriction of pivotal movement of the detachable lever 61 by the lock mechanism 66 is released. The detachable lever 61 pivots upward when the user operates it to pull up on the exposed portion at the rear of the cover 47. The detachable lever 61 pivots upward to displace the fixed hook 62 forward via the connecting member 63. When the fixed hook 62 is displaced forward, locking of the front end portion of the fixed hook 62 with respect to the carrier 6 is released. Accordingly, fixing of the storage part 40 with respect to the carrier 6 is released.

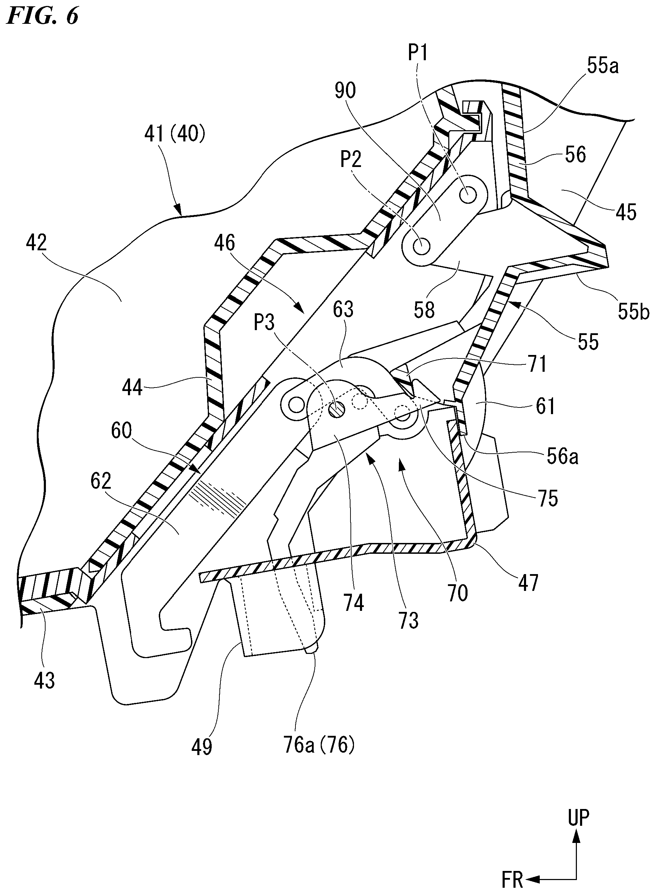

FIG. 6 is a cross-sectional view showing a state in which a locking part in the rear portion of the storage part of the first embodiment is locked, showing a cross section at a position corresponding to line VI-VI in FIG. 4.

As shown in FIG. 4 and FIG. 6, the locking part 70 is disposed between the buckle 55 and the base 46. The locking part 70 locks the opening/closing part 50 in a closed state by fixing the buckle 55 and maintaining it in a restrictive state, and is unlocked by driving the actuator 80 to allow the buckle 55 to transition to an allowing state. The locking part 70 includes locked parts 71 provided on the buckle 55, and a lever 73 having a locking claw 75 locked to the locked parts 71.

The locked parts 71 are fixed to the buckle 55. The locked parts 71 are disposed in front of the buckle 55 and located between the buckle 55 and the base 46. The pair of locked parts 71 are disposed in the leftward/rightward direction with an interval between them to avoid the detachable lever 61. Each of the locked parts 71 has a rod shape extending in the leftward/rightward direction.

The lever 73 is disposed in the concave portion 45 of the storage part main body 42. The lever 73 is covered from the outside by the cover 47 and the buckle 55, except for a tip portion 76a of an arm 76 described below. Accordingly, a place of the arm 76 other than the tip portion 76a is disposed in the lower case 41. The lever 73 is supported on the base 46. The lever 73 is pivotable about a third axis P3 extending to the leftward/rightward direction with respect to the base 46. The lever 73 is pivoted by receiving a driving force of the actuator 80. The lever 73 includes a base part 74 supported on the base 46, a pair of locking claws 75 extending rearward from the base part 74 and locked to the locked parts 71, and the arm 76 extending downward from the base part 74, and is a single member in which the base part 74, the locking claw 75 and the arm 76 are formed integrally. The lever 73 is biased around the third axis P3 by a biasing member (not shown) in a direction in which the locking claw 75 rises and the arm 76 moves backward.

The base part 74 is disposed in front of the lower end portion of the buckle 55. The base part 74 has a length in the leftward/rightward direction. The base part 74 extends below the detachable lever 61 and the connecting member 63 in the leftward/rightward direction to across them. Both end portions of the base part 74 in the leftward/rightward direction are axially supported on the base 46. The base part 74 abuts against the inner surface of the cover 47, restricting the pivotal movement of the locking claw 75 about the third axis P3 in the upward direction.

The locking claw 75 extends rearward from both end portions of the base part 74 in the leftward/rightward direction toward the main body part 56 of the buckle 55. The pair of locking claws 75 are disposed on opposite sides with the detachable lever 61 and the connecting member 63 sandwiched therebetween. A tip of the locking claw 75 is locked to the locked parts 71 to be releasable from below. The locking claw 75 is locked to the locked parts 71, restricting the backward swing of the buckle 55. The locking claw 75 is covered from the rear by the cover 47 and the buckle 55, making it invisible from the rear.

The arm 76 extends downward from an intermediate portion of the base part 74 in the leftward/rightward direction. The arm 76 is disposed at a position behind the detachable lever 61. The arm 76 protrudes downward from the storage part 40 through a through-hole that opens in the lower surface of the lower case 41. The arm 76 is inserted through the through-hole to be movable forward and rearward. The through-hole passes through a bottom portion of the cover 47. The arm 76 protrudes downward from the lower surface of the cover 47. The lower end of the arm 76 is located below the lower surface of the storage part main body 42 and the lower surface of the cover 47. Hereinafter, a portion of the arm 76 protruding downward from the storage part 40 is referred to as the tip portion 76a (protrusion). The lever 73 pivots around the third axis P3 by displacing the tip portion 76a of the arm 76 forward, and the pair of locking claws 75 are released from the locked parts 71. The tip portion 76a of the arm 76 is inserted into the insertion concave portion 6a of the carrier 6 from above.

As shown in FIG. 2, the lower case 41 includes a guard part 49 configured to cover the tip portion 76a of the arm 76. The guard part 49 covers the tip portion 76a of the arm 76 such that the tip portion 76a of the arm 76 is exposed in only a partial direction toward the outside of the storage part 40. The guard part 49 covers the entire tip portion 76a of the arm 76 from the front and both sides in the leftward/rightward directions so that the lower end of the tip portion 76a of the arm 76 is exposed downward from the rear, and also covers the upper portion of the tip portion 76a of the arm 76 from the rear. In the embodiment, the guard part 49 is formed on the base 46 and is a separate member from the cover 47. However, the guard part 49 may be formed integrally with the cover 47.

As shown in FIG. 1, the actuator 80 drives the locking part 70 to unlock the locking part 70. The actuator 80 is provided in the vehicle body. The actuator 80 is disposed to be displaceable with respect to the vehicle body frame 20. The actuator 80 may be fixed to the vehicle body frame 20 or may be fixed to the vehicle body cover 30. The actuator 80 is disposed at a position inside the rear side covers 33 in the vehicle width direction. For example, the actuator 80 is disposed between the storage box below the seat 4 and the rear side covers 33. The actuator 80 is driven by electric power. The actuator 80 has a motor and the like, and drives the output part with power supplied from a battery installed in the motorcycle 1. For example, the actuator 80 outputs a driving force by moving the output part forward and rearward.

As shown in FIG. 1 and FIG. 2, the transmission member 85 connects the actuator 80 and the locking part 70. The entire transmission member 85 is disposed in the motorcycle 1. The transmission member 85 includes a slide member 86 engaged with the arm 76 of the locking part 70, and a cable 87 configured to connect the slide member 86 and the output part of the actuator 80.

As shown in FIG. 2, the slide member 86 is connected to the arm 76 at a position below the storage part 40. The slide member 86 is disposed in the carrier 6. The slide member 86 is disposed at a position corresponding to the insertion concave portion 6a of the carrier 6. The slide member 86 is supported by the carrier 6 so as to be capable of relative displacement in the forward/rearward directions. The slide member 86 is engageable with the portion of the tip portion 76a of the arm 76 exposed from the guard part 49. The tip portion 76a of the arm 76 is separable upward from the slide member 86. The slide member 86 is biased rearward by the biasing member. The slide member 86 engages with the arm 76 as it moves forward, displacing the arm 76 forward.

The cable 87 has flexibility. The cable 87 is a so-called body cable, with an inner wire slidably inserted into a tubular outer cable. One end of the inner wire is connected to the output part of the actuator 80. The other end of the inner wire is connected to the slide member 86. The cable 87 extends from the actuator 80 through the vehicle body to be introduced into the carrier 6. For example, the cable 87 passes a position inside the rear side covers 33 in the vehicle width direction. The cable 87 is connected to the slide member 86 in the carrier 6.

The vehicle body side of the motorcycle 1 is provided with an electronic control unit (ECU) that controls driving of the actuator 80, and a transceiver that sends and receives information to and from the outside on the basis of instructions from the ECU. An occupant (driver or passenger) on the motorcycle 1 carries a smart key to unlock the locking part 70. The smart key communicates with a transceiver. When a driver or a passenger who carries the smart key performs a predetermined operation to unlock the locking part 70, the ECU instructs the transceiver to send a request signal to the smart key, requesting it to transmit an ID code for certification. The smart key that receives the request signal sends the ID code for certification to the transceiver. The ECU to which a smart key-side ID code (certification signal) is input from the transceiver compares the ECU-side ID code and the smart key-side ID code stored in the memory. When these ID codes match and certification is successful, the ECU sends an actuator driving signal to the driving circuit of the actuator 80 to drive the actuator 80.

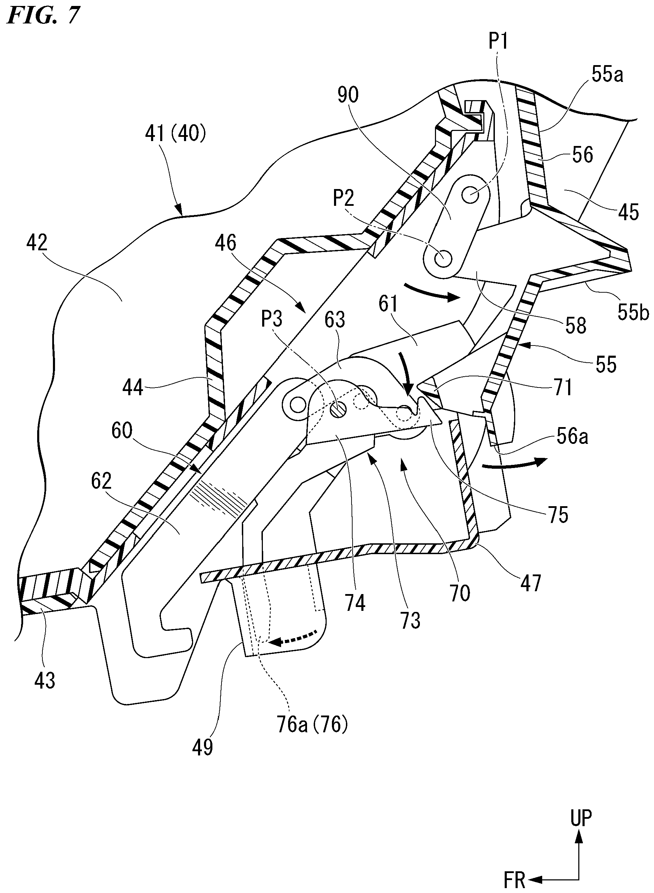

When the actuator 80 is driven, the output part of the actuator 80 pulls the inner wire of the cable 87 forward. The inner wire displaces the slide member 86 forward. Accordingly, as shown in FIG. 7, the arm 76 moves forward, the lever 73 pivots, and the locking claw 75 is disengaged from the locked parts 71. Accordingly, the locking part 70 is unlocked. When the locking claw 75 is disengaged from the locked parts 71, the buckle 55 swings backward due to the biasing force of the biasing member acting on the connecting part 58. When the buckle 55 swings backward, the buckle 55 can be displaced upward, so that the user can lift the buckle 55 by hooking his/her fingers on the handle 55b of the buckle 55. The user can lift the buckle 55 and move the locking part 57 rearward from the position above the locked edge portion 51 to displace the opening/closing part 50 upward and open the upper opening of the storage part main body 42 (see FIG. 5).

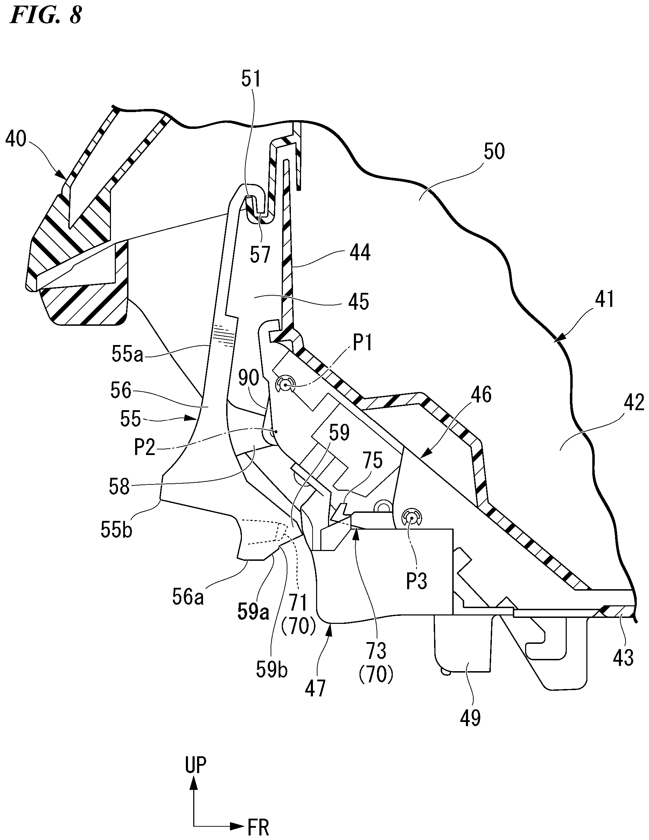

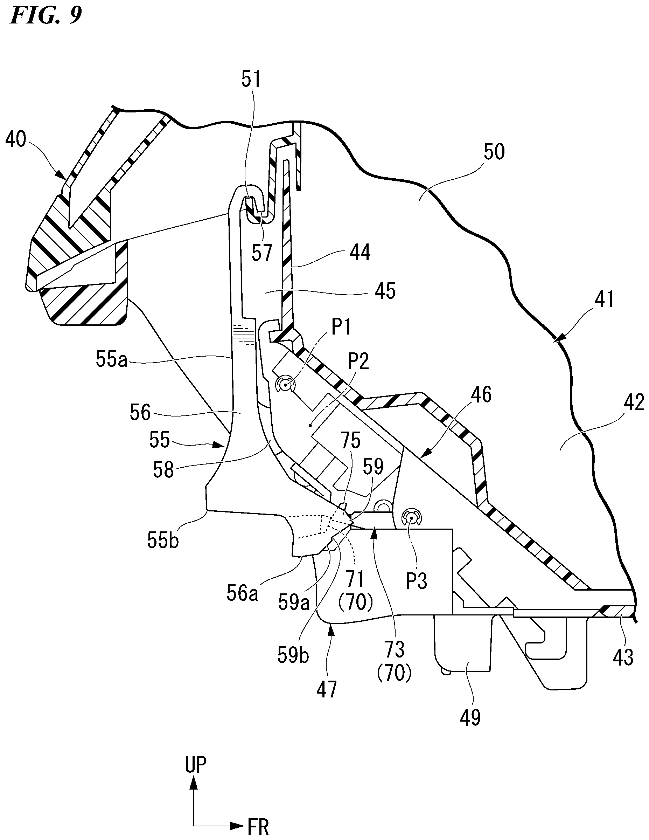

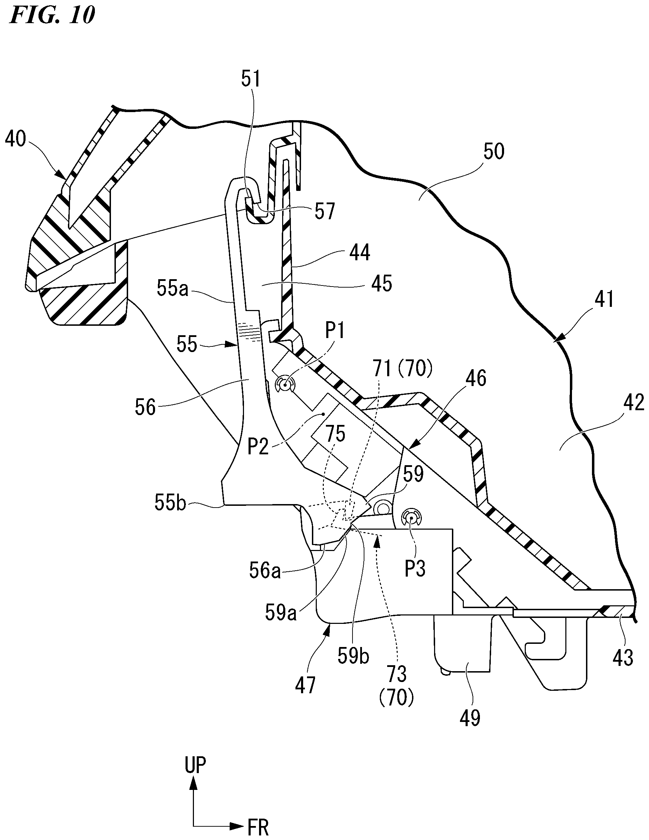

FIG. 8 is a cross-sectional view showing a state in which a buckle shown in FIG. 5 is displaced forward in the rear portion of the storage part of the first embodiment. FIG. 9 is a cross-sectional view showing a state in which the buckle shown in FIG. 8 is displaced forward in the rear portion of the storage part of the first embodiment. FIG. 10 is a cross-sectional view showing a state in which the buckle shown in FIG. 9 is displaced forward in the rear portion of the storage part of the first embodiment.

As shown in FIG. 8, in a state in which the opening/closing part 50 closes the upper opening of the storage part main body 42, when the link member 90 is pivoted about the first axis P1 and the buckle 55 is displaced forward from the position shown in FIG. 5, the locking part 57 is locked to the locked edge portion 51 from above. Accordingly, the buckle 55 is capable of swinging forward and rearward while pivoting the link member 90 about the first axis P1 so that its lower end portion is displaced in the forward/rearward direction. When the buckle 55 is pushed forward in the state shown in FIG. 8, the lower end portion of the buckle 55 is displaced forward as shown in FIG. 9. By further pushing the buckle 55 forward, the locked parts 71 fixed to the buckle 55 climb over the locking claw 75 of the lever 73 from above and are locked to the locking claw 75, and the buckle 55 is locked in the position shown in FIG. 10. When the locked parts 71 climb over the locking claw 75, the locking claw 75 displaces downward to avoid the locked parts 71 while resisting the biasing force of the biasing member. Here, the base part 74 is spaced from the inner surface of the cover 47. When the locked parts 71 overcome the locking claw 75, the locking claw 75 rises due to the biasing force of the biasing member. Here, the base part 74 comes into contact with the inner surface of the cover 47 to generate a click sound, and the lever 73 stops.

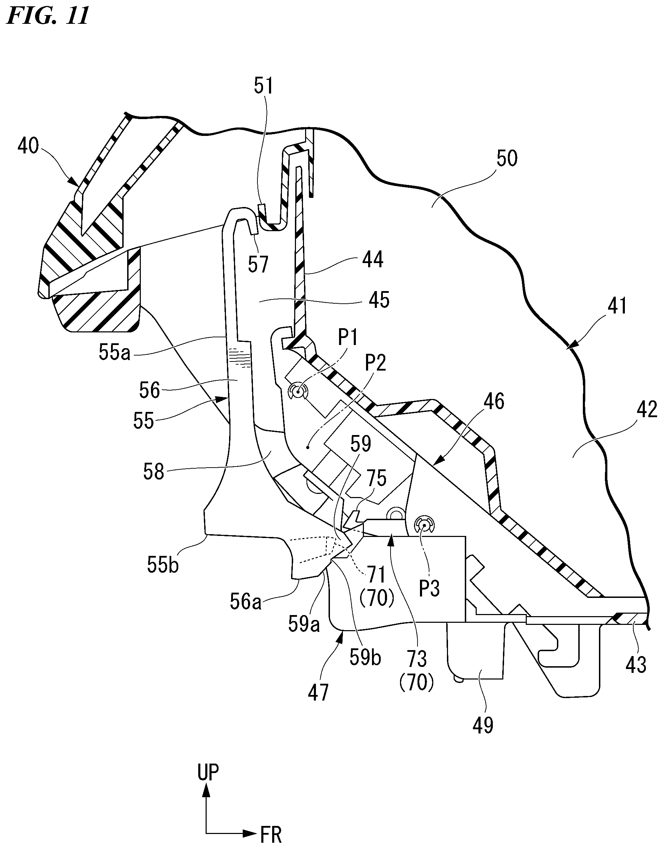

FIG. 11 is a cross-sectional view showing a state in which the buckle shown in FIG. 5 is displaced forward and downward in the rear portion of the storage part of the first embodiment.

When the buckle 55 is displaced forward and downward from the state shown in FIG. 5, the locking part 57 may not be locked to the locked edge portion 51 as shown in FIG. 11. In this case, the buckle 55 abuts against the cover 47 from the rear to restrict forward displacement of the buckle 55 in a state in which the locked parts 71 are not locked by the locking claw 75, and thus, it is possible to prevent the buckle 55 from being locked in an abnormal condition. For example, the buckle 55 restricts forward displacement in a state in which the lower edge 56a of the main body part 56 is raised rearward from the rear surface of the cover 47. In the example shown, forward-facing step differences 59b are formed on lower edges 59a of the side flanges 59 of the buckle 55, and the step differences 59b abut against the cover 47. Accordingly, it is possible to prevent the buckle 55 from being displaced to slide against the cover 47 when it is in contact with the cover 47 from behind, and to make the user recognize that the buckle 55 is in an abnormal state.

As described above, the storage part 40 of the embodiment includes the buckle 55 configured to open and close the storage part 40, and the locking part 70 which is configured to maintain the opening/closing part 50 in a closed state and which is unlocked by driving the actuator 80 provided separately from the storage part 40. The locking part 70 has the locked parts 71 provided on the buckle 55, and the lever 73 driven by the actuator 80 and having the locking claw 75 locked to the locked parts 71. According to this configuration, since the actuator 80 is provided on the motorcycle 1 separately from the storage part 40, reduction in volume of the storage part 40 caused by providing the actuator in the storage part can be suppressed. Accordingly, it is possible to achieve improvement of convenience for the user by controlling the locking state using the actuator 80, and ensure the volume of the storage part 40 without compromising the appearance of the storage part 40. Further, it is possible to achieve centralization of the mass of the vehicle by providing the actuator 80 in the motorcycle 1, and achieve improvement of portability of the storage part 40 by reducing the weight of the unit on the side of the storage part 40. In addition, since a degree of freedom in disposition of the actuator 80 is improved, it is possible to appropriately realize the disposition of the actuator 80 that requires less manufacturing cost.

The storage part structure of the motorcycle 1 further includes the transmission member 85 configured to connect the actuator 80 and the locking part 70. The actuator 80 drives the locking part 70 via the transmission member 85. According to this configuration, since the actuator 80 is not directly connected to the locking part 70, the degree of freedom in disposition of the actuator 80 can be improved.

The actuator 80 is disposed in the vehicle body. The transmission member 85 has a wire shape. According to this configuration, since the transmission member 85 is deformable, the degree of freedom in disposition of the actuator 80 can be further improved.

The transmission member 85 is connected to the locking part 70 at a position below the storage part 40. According to this configuration, since the entire mechanism configured to drive the locking part 70 can be disposed outside the storage part 40, it is possible to achieve enlargement of the volume of the storage part 40.

The locking part 70 has the lever 73 driven by the actuator 80. The lever 73 has the tip portion 76a of the arm 76 protruding downward from the storage part 40.

The storage part 40 has the guard part 49 configured to cover surroundings of the tip portion 76a of the arm 76. According to this configuration, it becomes harder for people to come into contact with the lever 73. Accordingly, it is possible to suppress the lever 73 from being directly operated and improve anti-theft properties. In addition, when the storage part 40 is removed from the carrier 6 and placed on a floor surface or the like, the guard part 49 can be brought into contact with the floor surface or the like, thereby preventing the lever 73 from being subjected to a load due to the contact between the tip portion 76a of the arm 76 and the floor surface or the like. Accordingly, it is possible to protect the lever 73.

The motorcycle 1 has the carrier 6 provided behind the seat 4 and configured to support the storage part 40. The carrier 6 has the insertion concave portion 6a into which the tip portion 76a of the arm 76 is inserted. According to this configuration, the motorcycle 1 can be formed so that the member engaged with the lever 73 does not protrude upward from the carrier 6 towards the storage part 40. Accordingly, with the storage part 40 removed from the carrier 6, the motorcycle 1 is obtained, which allows easy loading of luggage onto the carrier 6.

The detachable unit 60 and the locking part 70 are attached to the storage part main body 42 via the base 46 together with the buckle 55. This configuration makes the unit including the base 46, the buckle 55, the detachable unit 60 and the locking part 70 detachable from the storage part main body 42. For this reason, the storage part main body 42 can be used in common with the storage part structure that is locked by the actuator 80 of this embodiment and a storage part structure that is manually locked in the related art.

### [Second embodiment]

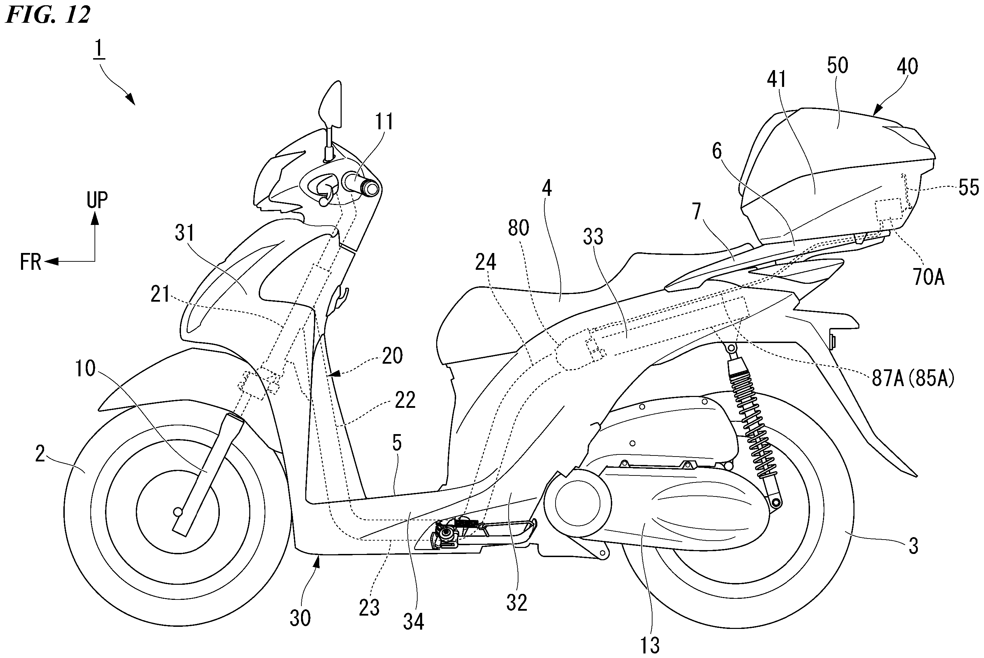

Next, a second embodiment will be described with reference to FIG. 12. The second embodiment is distinguished from the first embodiment in that a transmission member 85A is connected to a locking part 70A at inside of a storage part 40. Further, the other configurations described below are the same as in the first embodiment.

FIG. 12 is a left side view of a motorcycle of the second embodiment.

As shown in FIG. 12, a cable 87A of the transmission member 85A extends from the actuator 80 through the vehicle body and the carrier 6 and is introduced into the storage part 40. The cable 87A is directly connected to the locking part 70A at inside of the storage part 40 or indirectly connected thereto via a slide member or the like. Further, in the embodiment, the entire locking part 70A is disposed in the lower case 41.

In the embodiment, the same effects as in the first embodiment are exhibited. In addition, in the embodiment, the transmission member 85 is connected to the locking part 70 at inside of the storage part 40. With this configuration, since the entire locking part 70A can be positioned within the storage part 40, it is possible to prevent portability of the storage part 40 removed from the carrier 6 from being decreased due to protrusion of the locking part 70A from the storage part 40.

### [Third embodiment]

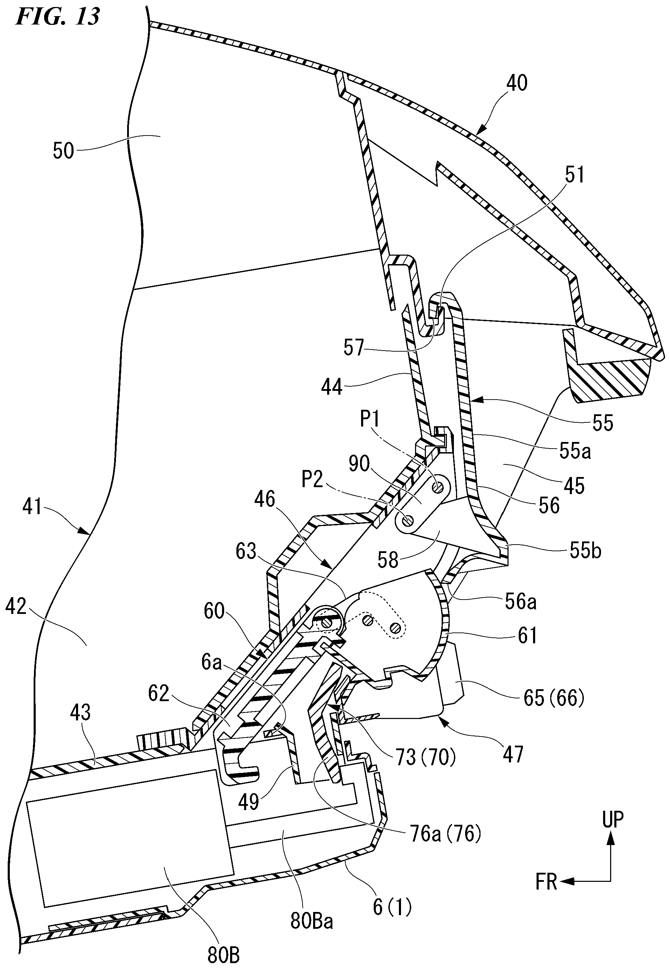

Next, a third embodiment will be described with reference to FIG. 13. The third embodiment is distinguished from the first embodiment in that an actuator 80B is directly connected to a locking part 70. Further, the other configurations described below are the same as in the first embodiment.

FIG. 13 is a cross-sectional view on a vehicle width center showing a rear portion of a storage part and a carrier of the third embodiment, corresponding to FIG. 2.

As shown in FIG. 13, the actuator 80B is provided on the carrier 6. The actuator 80B directly drives the locking part 70 by engaging an output part 80Ba thereof with the tip portion 76a of the arm 76 of the locking part 70.

In the embodiment, the same effects as in the first embodiment are exhibited. In addition, in the embodiment, by replacing the carrier 6, a motorcycle having the above-mentioned functions and effects can be obtained. Accordingly, the storage part structure that can be applied to various types of motorcycles is obtained.

### [Fourth embodiment]

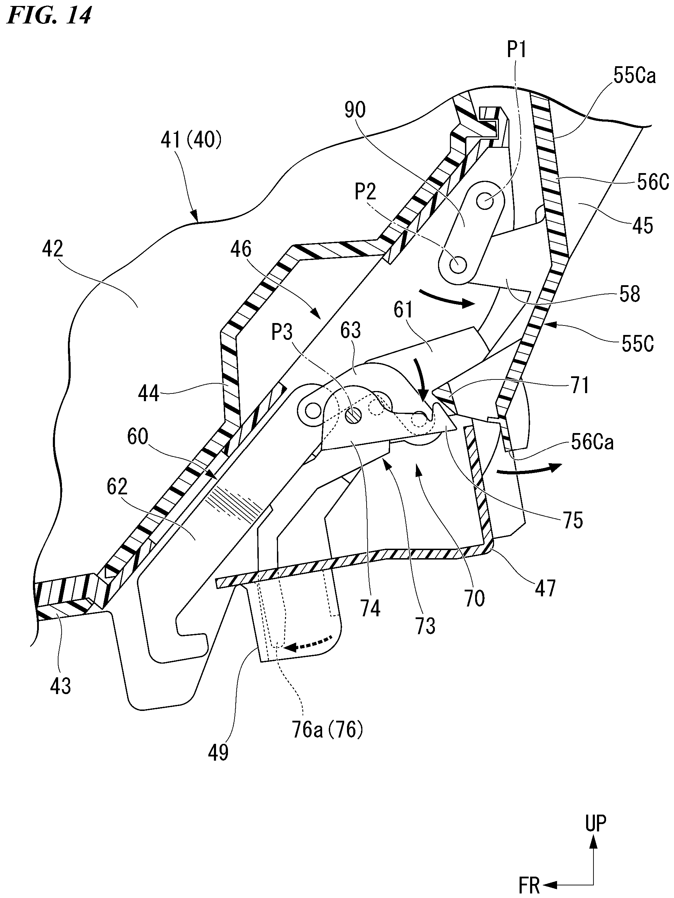

Next, a fourth embodiment will be described with reference to FIG. 14. The fourth embodiment is distinguished from the first embodiment in that a buckle 55C has no handle. Further, the other configurations described below are the same as in the first embodiment.

FIG. 14 is a cross-sectional view showing a state in which the locking part is unlocked in the rear portion of the storage part of the fourth embodiment, corresponding to FIG. 7.

As shown in FIG. 14, an outer surface 55Ca of the buckle 55C is formed flat and has no convex structure such as a handle or the like. A lower edge 56Ca (edge portion) of a main body part 56C having the outer surface 55Ca is disposed along a rear surface of the cover 47 such that a gap is substantially not provided between the cover 47 and the lower edge, like the first embodiment. Then, as the locking part 70 is unlocked and the buckle 55C swings rearward, the lower edge 56Ca of the main body part 56C is displaced toward the outside of the storage part 40. Accordingly, a gap is formed between the lower edge 56Ca of the main body part 56C and the cover 47, a user's finger can be hooked to the lower edge 56Ca of the main body part 56C, and this allows the buckle 55C to be lifted.

In the embodiment, the same effects as in the first embodiment are exhibited. In addition, in the embodiment, since the outer surface 55Ca of the buckle 55C is smooth, no handle is provided on the buckle 55C, improving the appearance. Furthermore, the absence of the handle can prevent people from maliciously applying excessive force to the buckle 55C, improving anti-theft properties. Further, when the locking part 70 is unlocked, the lower edge 56Ca of the main body part 56C of the buckle 55C is displaced outward, making it possible for a user to operate the buckle 55C by hooking a finger on the lower edge 56Ca of the buckle 55C.

Further, the present invention is not limited to the above-mentioned embodiment described with reference to the drawings, and various variants are possible within the technical scope of the present invention.

For example, while the present invention is applied to the motorcycle in the embodiment, the present invention may be applied to vehicles other than the motorcycle. That is, the present invention may be applied to saddle riding vehicles including motorcycles, three-wheeled motor vehicles, or four-wheeled motor vehicles such as buggies and all terrain vehicles (ATVs), as well as vehicles other than the saddle riding vehicles (passenger cars, buses, trucks, and the like).

While the transmission member 85 includes the wire-shaped cable 87 and the slide member 86 connected to the cable 87 in the above-mentioned embodiment, the configuration of the transmission member is not limited thereto. For example, the entire transmission member may be in the form of a wire, or the entire transmission member may be a hard rod or the like.

While the storage part 40 is directly attached to the carrier 6 in the embodiment, there is no limitation thereto. The storage part may be attached to the carrier via a box base that is provided separately from the storage part.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

A storage part (40) includes a storage part main body (42) having an opening, an opening/closing part (50) configured to releasably close the opening of the storage part main body (42), a buckle (55) configured to open and close the storage part (40), and a locking part (70) which is configured to maintain the opening/closing part (50) in a closed state and which is unlocked by a driving of an actuator (80) provided separately from the storage part (40). The locking part (70) has a locked part provided on the buckle (55), and a lever which is driven by the actuator (80) and which has a locking claw locked to the locked part.

## Claims

1. A storage part (40) comprising:
a storage part main body (42) having an opening; and
an opening/closing part (50) configured to releasably close the opening of the storage part main body (42),
further comprising:
a buckle (55, 55C) configured to open and close the storage part (40); and
a locking part (70) which is configured to maintain a closed state of the opening/closing part (50) and which is unlocked by a driving of an actuator (80, 80B) provided separately from the storage part (40),
wherein the locking part (70) has:
a locked part (71) provided on the buckle (55, 55C); and
a lever (73) which is driven by the actuator (80, 80B) and which has a locking claw (75) locked to the locked part (71).

2. The storage part according to claim 1, further comprising a transmission member (85, 85A) configured to connect the actuator (80) and the locking part (70),
wherein the actuator (80) is configured to drive the locking part (70) via the transmission member (85, 85A).

3. The storage part according to claim 2, wherein the actuator (80) is disposed in a vehicle body, and
the transmission member (85, 85A) has a wire shape.

4. The storage part according to claim 2 or 3, wherein the transmission member (85) is connected to the locking part (70) at a position below the storage part (40).

5. The storage part according to claim 2 or 3, wherein the transmission member (85A) is connected to the locking part (70) at inside of the storage part (40).

6. The storage part according to claim 1, wherein the storage part (40) is supported by a base member (6) from below, and
the actuator (80B) is provided on the base member (6) and directly drives the locking part (70).

7. The storage part according to any one of claims 1 to 3, wherein the locking part (70) has a lever (73) driven by the actuator (80, 80B),
the lever (73) has a protrusion (76a) protruding downward from the storage part (40), and
the storage part (40) has a guard part (49) configured to cover surroundings of the protrusion (76a).

8. The storage part according to any one of claims 1 to 3, wherein the buckle (55C) is provided to be pivotable with respect to the storage part main body (42) or the opening/closing part (50), releasably locked to the opening/closing part (50) to restrict opening of the opening of the storage part main body (42) by the opening/closing part (50), and releasable from the opening/closing part (50) by unlocking the locking part (70), and
the buckle (55C) has:
a smooth outer surface (55Ca) directed toward the outside of the storage part (40); and
an edge portion (56Ca) displaced toward the outside of the storage part (40) by unlocking the locking part (70).

9. The storage part according to any one of claims 1 to 3, wherein the storage part is provided separately from a vehicle body, and
the actuator (80, 80B) is provided on a side of the vehicle body.

10. The storage part according to claim 9, wherein the storage part is attachable to a carrier (6) provided behind a seat (4) of a saddle riding vehicle (1),
the locking part (70) has a lever (73) driven by the actuator (80, 80B),
the lever (73) has a protrusion (76a) protruding downward from the storage part (40), and
the protrusion (76a) is inserted into an insertion concave portion (6a) formed in the carrier (6).
